# EUROPEAN PATENT APPLICATION

(11) **EP 2 365 464 A1**
(43) Date of publication of application: **14.09.2011**
(21) Application number: 09824365.2
(22) Date of filing: 21.08.2009
(51) Int. Cl.: G06K 19/00

(54) **METHOD FOR GENERATING SMART CARD SECRET KEY**

(30) Priority: 10.11.2008 CN 200810172460
(71) Applicant: ZTE Corporation, Shenzhen, Guangdong 518057 (CN)
(72) Inventor: YU, Wantao, Shenzhen Guangdong 518057 (CN); MA, Jingwang, Shenzhen Guangdong 518057 (CN); JIA, Qian, Shenzhen Guangdong 518057 (CN)
(74) Representative: Petraz, Gilberto Luigi
(86) International application number: PCT/CN2009/073394
(87) International publication number: WO 2010/051710

(57) **Abstract**

A method for generating a smart card secret key is provided. The method comprises the following steps: the management platform generates a random number for smart card security domain, and uses the random number to generate the dispersion parameter for smart card security domain; the dispersion parameter and the seed secret key of the management platform are taken as the parameters of the dispersion algorithm which is used to generate the secret key for the smart card security domain. When generating the secret key for the smart card security domain, the method generates a new random number for smart card security domain (issuer security domain or supplementary security domain), and uses the newly generated random number to generate a new dispersion parameter, and finally uses the new dispersion parameter to generate a new secret key for the smart card security domain.

## Description

### Technical Field

The present invention relates to a method for generating smart card secret key.

### Background of the Related Art

With more than ten years of development, the integrate circuit (IC) card, especially the contactless IC card, has been widely used in the fields of public traffic system, entrance guard and electronic micro-payment. Meanwhile, with years of rapid development, the cell phone has been widely used, which brings significant convenience to the people's work and life. To date, the function of the cell phone is more and more powerful and it is a trend that the cell phone will be integrated with more functions, combining the cell phone with the contactless IC card technology to apply in the electronic payment field will further extend the application of the cell phone and bring people more convenience, thus it has wide application prospect.

The technology of Near Field Communication (NFC) is a near distance wireless communication technology working on 13.56MHz, and is evolved from the radio frequency identification (RFID) and interconnection technology. After a mobile terminal such as the cell phone is integrated with the NFC technology, it can simulate the contactless IC card to apply into the relevant applications of the electronic payment. In order to achieve this scheme in the mobile terminal, it should add a NFC analog front-end chip and a NFC antenna and also use a smart card supporting the electronic payment.

In order to achieve the mobile electronic payment based on the NFC technology, it needs to establish the mobile terminal electronic payment system, with which to achieve the management of the mobile terminal electronic payment based on the NFC, comprising: smart card release, smart card secret key management, downloading, installation and personalization of the electronic payment application, as well as applying related technology and management strategy to achieve the security of the electronic payment functions.

The service framework of the mobile terminal electronic payment system based on the NFC technology uses the multi-application framework of the Global Platform specification, and in this framework, the smart card supporting the Global Platform specification refers to the IC chip or smart card which accords with the Global Platform Card Specification V2.1.1/V2.2 (abbreviated to GP2.1.1/GP2.2 specification), and can be subscriber identification module/universal subscriber identity module (SIM/USIM) card, pluggable smart memory card or the IC chip integrated in the mobile terminal.

If the mobile terminal electronic payment system based on the NFC technology supports the GP2.1.1 specification, the security channel protocol should support SCP02 (based on the symmetric key); if the mobile terminal electronic payment system based on the NFC technology supports the GP2.2 specification, the security channel protocol should support SCP02 (based on the symmetric key) and SCP10 (based on the asymmetric key), the card issuers and application providers can be selected according to different security strategy needs.

In general conditions, the mobile terminal near field electronic payment system based on the NFC technology mainly comprises a card issuer management platform, an application provider management platform and a mobile terminal supporting the smart card with electronic payment application function, and the system might have a plurality of application provider management platforms.

A plurality of applications can be installed in the smart card supporting the Global Platform specification. In order to achieve the security of the electronic payment applications, the smart card is divided into several individual security domains to guarantee the isolation and independence among the multiple applications. Each application provider manages his/her own security domain, as well as application and application data.

The security domains are the representatives of the off-card entities (including the card issuer and the application provider) in the card, and they comprise the keys supporting the operation of security channel protocol and the management of smart card content. The security domains comprise the issuer security domain and the supplementary security domain. The issuer security domain is the compulsory on-card representative of the card issuer in the smart card. The supplementary security domain is the additional optional on-card representative of the card issuer or the application provider in the smart card.

The security domain key generation is under the charge of the card issuer or the application provider managing the security domain, which guarantees that the applications and data from different application providers can exist in the same smart card. The security domain keys comprise: the issuer security domain key, the supplementary security domain initial key and the supplementary security domain key. The issuer security domain key and the supplementary security domain initial key are generated by the card issuer management platform, while the supplementary security domain key is generated by the card issuer management platform or the application provider management platform managing the supplementary security domain. The method for generating the security domain keys directly affects the complexity in managing the smart card security domain keys.

Fixed dispersion parameter is generally used to disperse the seed key for several times in the prior art to generate the smart card security domain keys. Since the fixed dispersion parameter is used, the method for generating the smart card security domain keys in the prior art is not easy to update (that is, regenerate) the keys.

### Summary of the Invention

The present invention offers a method for generating the smart card security domain keys which are easy to be updated to overcome deficiency in the prior art.

In order to solve the above technical problem, the present invention offers a method for generating smart card keys, and said method can generate keys for smart card security domains, and said method comprises:
The management platform generates random numbers for the smart card security domains and uses said random numbers to generate dispersion parameters for the smart card security domains;
Use the above dispersion parameters and the seed key of the management platform as parameters of the dispersion algorithm, and use the dispersion algorithm to generate keys for the smart card security domain.

Furthermore, in said method, said step of using said random numbers to generate the dispersion parameters for the smart card security domains is:
The management platform using the random numbers generated for the smart card security domains and the following parameters to perform an operation: all or part of bytes in the smart card identification corresponding to the smart card security domains, and/or all or part of bytes in smart card security domain identification of the smart card security domains;
The management platform using the result of the above operation to generate the dispersion parameters of the smart card security domains with the hash algorithm.

Furthermore, in said method, said step of using said random numbers to generate the dispersion parameters for the smart card security domains is: using said random numbers as the dispersion parameters of the smart card security domains.

Furthermore, in said method, said management platform saves the random numbers of the smart card security domains, or the corresponding relationship between the dispersion parameters and the smart card security domain identification.

Furthermore, in said method, the seed key of said management platform is the second level dispersion seed key generated by the security agency with the following method and distributed to said management platform:
The security agency generates a random number for the management platform and uses the random number as the first level dispersion parameter, or carries out an operations on this random number and the management platform identification and uses the operation result to generate the first level dispersion parameter with the hash algorithm;
The security agency uses the generated first level dispersion parameter and the seed key of the security agency as the parameters of a dispersion algorithm which is used to generate said second level dispersion seed key.

Furthermore, in said method, said security agency saves the corresponding relationship between said management platform and the random number generated for said management platform or said first level dispersion parameter.

Furthermore, in said method, said operation is a logic operation.

Furthermore, in said method, said logic operation is XOR operation.

Furthermore, in said method, if said management platform is a card issuer management platform, said security agency is a card issuer security agency;

If said management platform is an application provider management platform, said security agency is an application provider security agency.

Furthermore, in said method, if said smart card security domain is a smart card issuer security domain, said management platform saves the random number corresponding to said smart card issuer security domain in the mapping table of the corresponding relationship between the smart card identification and the random numbers, or saves the dispersion parameters corresponding to said smart card issuer security domain in the mapping table of the corresponding relationship between the smart card identification and the dispersion parameters;

If said smart card security domain is a smart card supplementary security domain, said management platform saves the random number corresponding to said smart card supplementary security domain in the mapping table of the corresponding relationship between the smart card identification, the supplementary security domain identification and the random numbers, or saves the dispersion parameters corresponding to the smart card supplementary security domain in the mapping table of the corresponding relationship between the smart card identification, the supplementary security domain identification and the dispersion parameters.

To sum up, with the method for generating the smart card key in the present invention, new random numbers are generated for the smart card security domains (issuer security domains or supplementary security domains) when generating the smart card security domain keys, and the new generated random numbers are used to generate new dispersion parameters, and finally the new dispersion parameters are used to generate new smart card security domain keys, so as to solve the problem that the smart card security domain keys are not easy to be updated.

### Brief Description of Drawings

FIG. 1A is a schematic diagram of the method for generating the smart card issuer security domain key in accordance with an embodiment of the present invention;
FIG. 1B is a flow chart of the method for generating the smart card issuer security domain key in accordance with an embodiment of the present invention;
FIG. 2A is a schematic diagram of the method for updating and generating the smart card issuer security domain key in accordance with an embodiment of the present invention;
FIG. 2B is a flow chart of the method for updating the smart card issuer security domain key in accordance with an embodiment of the present invention;
FIG. 3A is a schematic diagram of the method for generating the smart card supplementary security domain initial key in accordance with an embodiment of the present invention;
FIG. 3B is a flow chart of the method for generating the smart card supplementary security domain initial key in accordance with an embodiment of the present invention;
FIG. 4A is a schematic diagram of the method for generating the supplementary security domain key managed by the card issuer in accordance with an embodiment of the present invention;
FIG. 4B is a flow chart of the method for generating the supplementary security domain key managed by the card issuer in accordance with an embodiment of the present invention;
FIG. 5A is a schematic diagram of the method for generating the supplementary security domain key of the supplementary security domain managed by the application provider in accordance with an embodiment of the present invention;
FIG. 5B is a flow chart of the method for generating the supplementary security domain key of the supplementary security domain managed by the application provider in accordance with an embodiment of the present invention;
FIG. 6A is a schematic diagram of the method for updating the smart card supplementary security domain key in accordance with an embodiment of the present invention;
FIG. 6B is a flow chart of the method for updating the smart card supplementary security domain key in accordance with an embodiment of the present invention.

### Preferred Embodiments of the Present Invention

The basic idea of the present invention is: when generating a smart card security domain key, a new random number is generated for the smart card security domain and the random number is used as the parameter to generate a new dispersion parameter with the security hash algorithm, and the dispersion parameter and the seed key are used to generate a new smart card security domain key.

Before further illustrating the method for generating the smart card security domain keys in the present invention, the application environments of the method in the present invention, that is, the basic concept of the system for generating and updating the smart card security domain keys will be described briefly at first.

The system for generating and updating smart card security domain keys comprises a smart card, a management platform, and a security agency. Wherein:
The smart card can be installed in a mobile terminal supporting the NFC technology and supports the Global Platform Card Specification V2.1.1/V2.2.

The management platform is used to manage the keys, such as generating and updating the keys. The management platform can be a card issuer management platform, and it also can be an application provider management platform.

The management platform supports the symmetric encryption algorithm such as the advanced encryption standard-cipher block chaining (AES-CBC) algorithm or the triple data encryption standard (3DES) algorithm for the key dispersion processing.

Moreover, the management platform also supports that a security hash algorithm such as security hash algorithm 1 (SHA1) or security hash algorithm 2 (SHA2) generates the dispersion parameters.

The security agency can be a card issuer security agency, and it can also be an application provider security agency. The card issuer security agency manages a plurality of card issuer management platforms; the application provider security agency manages a plurality of provider management platforms.

In the present invention, a multiple-level key generation system composed of a security agency, a management platform and a smart card should be configured as desired. In order to illustrate the method of the present invention, a three-level key generation system frame composed of the security agency, the management platform and the smart card is applied in the present invention, wherein, the security agency corresponds to the first level, the management platform corresponds to the second level and the smart card corresponds to the third level. If the management platform is further leveled, it becomes a multi-level key generation system composed of a security agency, a management platform with different levels and a smart card. The scheme to achieve the three level key generation system can be extended to a multi-level key generation system.

In addition, the management platform/ security agency of the card issuer and the application provider have their own seed keys; the seed keys are the root keys of system which are used to generate the security domain keys.

The present invention will be described in detail combining with the accompanying figures and embodiments.

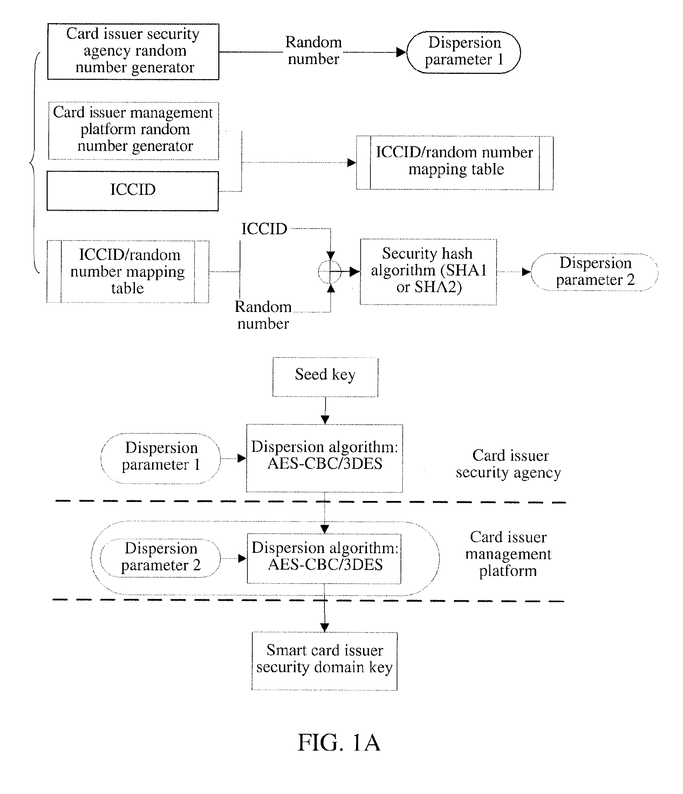

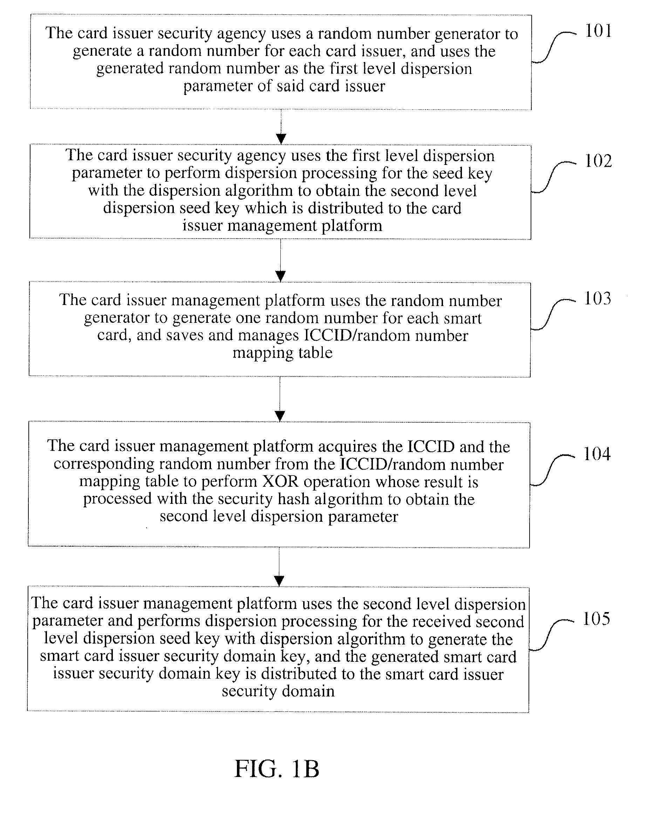

FIG. 1A is a schematic diagram of the method for generating the smart card issuer security domain key in accordance with an embodiment of the present invention, and FIG. 1B is a flow chart of the method for generating the smart card issuer security domain key in accordance with an embodiment of the present invention. As shown in FIG. 1A and FIG. 1B, the method for generating the smart card issuer security domain key in the present invention comprises the following steps:
Step 101: the card issuer security agency uses a random number generator to generate a random number for each card issuer (card issuer management platform), and uses the generated random number as the first level dispersion parameter (dispersion parameter 1) of said card issuer (card issuer management platform);
   the card issuer security agency saves the random number/first level dispersion parameter generated for the card issuer in the mapping table of the random number and the card issuer management platform, and the mapping table is saved by the card issuer security agency.
Step 102: The card issuer security agency uses the first level dispersion parameter to perform dispersion processing for the seed key of the card issuer security agency with the dispersion algorithm to obtain the second level dispersion seed key which is distributed to the card issuer management platform through a secure way;
   the dispersion algorithm in the embodiment of the present invention uses the symmetric encryption algorithm such as AES-CBC algorithm or 3DES algorithm, which is the same below.
Step 103: the card issuer management platform uses the random number generator to generate one random number for each smart card, and the card issuer management platform saves and manages the mapping table of the corresponding relationship between the integrated circuit card identification (ICCID) and the random number (called ICCID/random number mapping table in the following);
   the card issuer management platform saves the corresponding relationship between the ICCID and the random number to recover the generated smart card security domain keys subsequently.
Step 104: the card issuer management platform acquires the ICCID and the corresponding random number from the ICCID/random number mapping table to perform XOR operation whose result is processed with the security hash algorithm (SHA1 or SHA2 algorithm) to obtain the second level dispersion parameter (dispersion parameter 2);
   in this step, the card issuer management platform actually generates a second level dispersion parameter for the smart card issuer security domain by taking the ICCID as the smart card issuer security domain identification.
Step 105: the card issuer management platform uses the second level dispersion parameter and uses the symmetric encryption algorithm (such as AES-CBC or 3DES algorithm) to perform dispersion processing for the second level dispersion seed key received by the card issuer management platform to generate the smart card issuer security domain key, and the generated smart card issuer security domain key is distributed to the smart card issuer security domain through a secure way.

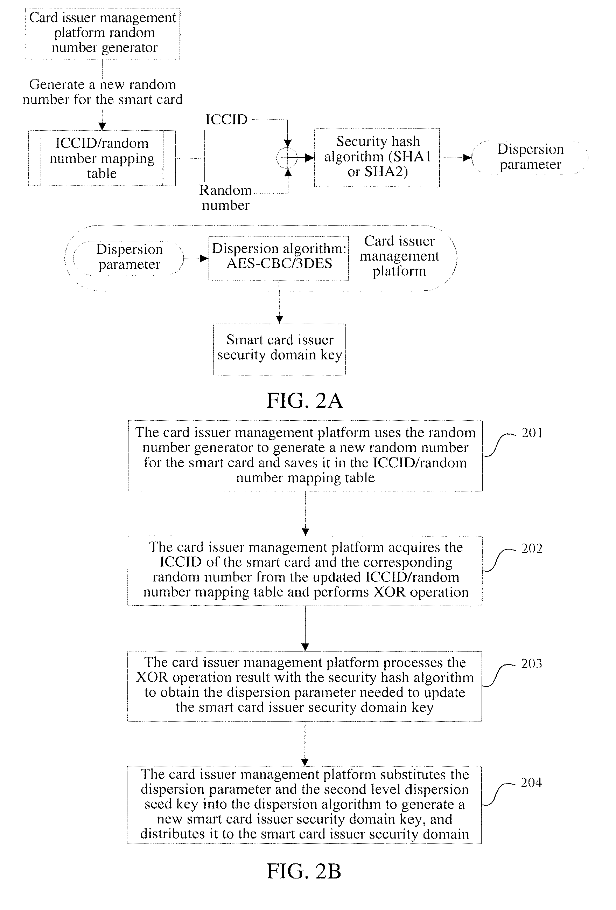

FIG. 2A is a schematic diagram of the method for updating and generating (abbreviated to updating in the following) the smart card issuer security domain key in accordance with an embodiment of the present invention, and FIG. 2B is a flow chart of the method for updating the smart card issuer security domain key in accordance with an embodiment of the present invention.

In this embodiment, the card issuer management platform manages the smart card issuer security domain key and sets the time for updating the smart card issuer security domain key; when the smart card issuer security domain key is about to expire, or should be updated compulsorily due to security reason, the card issuer management platform starts updating the smart card issuer security domain key. As shown in FIG. 2A and FIG. 2B, the method for the card issuer management platform updating the smart card issuer security domain key comprises the following steps:
Step 201: when a smart card needs to update the issuer security domain key, the card issuer management platform uses the random number generator to generate a new random number for the smart card to replace the random number corresponding to the smart card in the ICCID/random number mapping table, and saves the updated ICCID/random number mapping table;
Step 202: the card issuer management platform acquires the ICCID of the smart card and the corresponding random number from the updated ICCID/random number mapping table and performs XOR operation;
Step 203: the card issuer management platform processes the XOR operation result in step 202 with the security hash algorithm (such as SHA1 or SHA2) to obtain the dispersion parameter needed to update the smart card issuer security domain key;
Step 204: the card issuer management platform substitutes the dispersion parameter obtained in step 203 and the second level dispersion seed key saved by the card issuer management platform into the symmetric encryption algorithm (such as AES-CBC or 3GDE) to generate a new smart card issuer security domain key, and distributes the generated new issuer security domain key in a secure way to the smart card issuer security domain, and achieves the update of the smart card issuer security domain key.

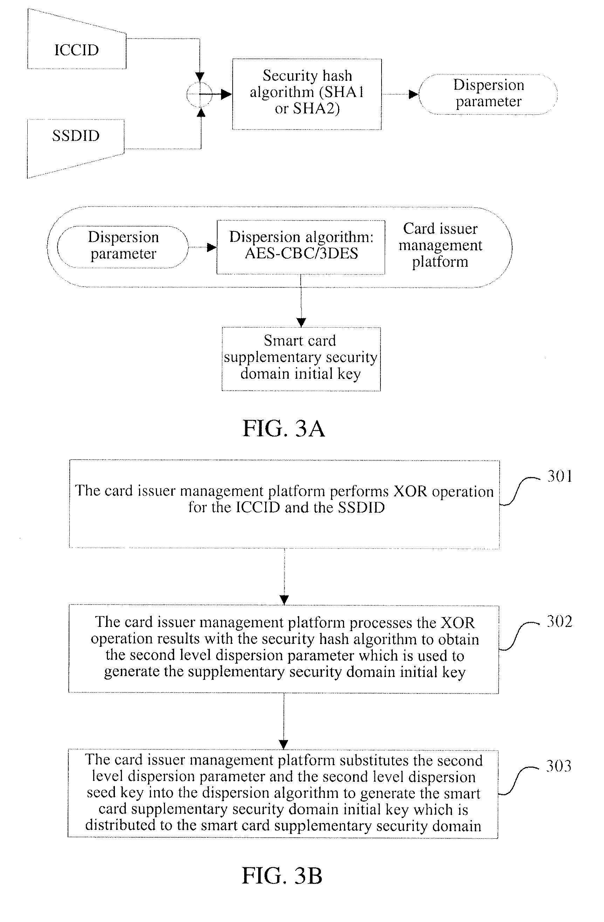

FIG. 3A is a schematic diagram of the method for generating the smart card supplementary security domain initial key in accordance with an embodiment of the present invention, and FIG. 3B is a flow chart of the method for generating the smart card supplementary security domain initial key in accordance with an embodiment of the present invention. As shown in FIG. 3A and FIG. 3B, the method for generating the smart card supplementary security domain initial key in this embodiment comprises the following steps:
Step 301: when the card issuer management platform creates the smart card supplementary security domain, it performs XOR operation for the ICCID and the supplementary security domain identification (SSDID) of the smart card;
Step 302: the card issuer management platform processes the XOR operation results in step 301 with the security hash algorithm (SHA1 or SHA2 algorithm) to obtain the second level dispersion parameter which is used to generate the supplementary security domain initial key;
Step 303: the card issuer management platform substitutes the second level dispersion parameter obtained in step 302 and the second level dispersion seed key saved by the card issuer management platform into the symmetric encryption algorithm (AES-CBC or 3DES algorithm), to generate the smart card supplementary security domain initial key which is distributed to the smart card supplementary security domain through a secure way.

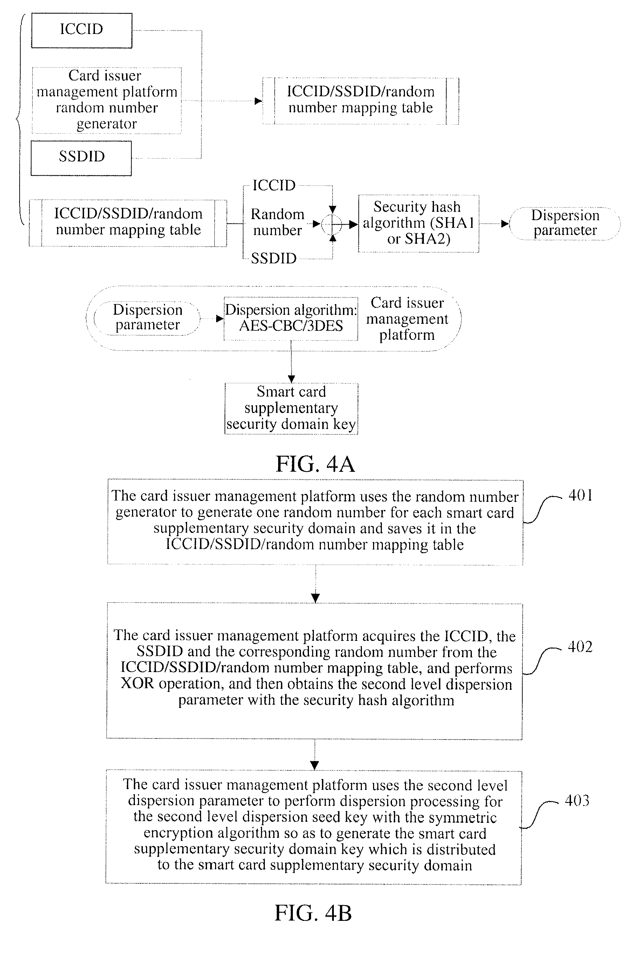

For the smart card supplementary security domain managed by the card issuer, the smart card supplementary security domain key is generated by the card issuer management platform. FIG. 4A is a schematic diagram of the method for generating the supplementary security domain key managed by the card issuer in accordance with an embodiment of the present invention, and FIG. 4B is a flow chart of the method for generating the supplementary security domain key managed by the card issuer in accordance with an embodiment of the present invention. As shown in FIG. 4A and FIG. 4B, the method for generating the smart card supplementary security domain key managed by the card issuer comprises the following steps:
Step 401: the card issuer management platform uses the random number generator to generate a random number for each smart card supplementary security domain, and the card issuer management platform saves and manages the mapping table of the corresponding relationship between the ICCID, SSDID and the random number (called ICCID/SSDID/random number mapping table in the following);
Step 402: directing at a smart card supplementary security domain which needs to generate a supplementary security domain key, the card issuer management platform acquires the ICCID of the smart card, the SSDID of the smart card supplementary security domain and the corresponding random number from the ICCID/SSDID/random number mapping table, and performs XOR operation , and then processes the XOR operation result with the security hash algorithm (SHA1 or SHA2 algorithm) to obtain the second level dispersion parameter;
Step 403: the card issuer management platform uses the above second level dispersion parameter and perform dispersion processing for the second level dispersion seed key of the card issuer management platform with the symmetric encryption algorithm (AES-CBC or 3DES) so as to generate the smart card supplementary security domain key which is distributed to the smart card supplementary security domain through a secure way.

For the supplementary security domain managed by the application provider, after the card issuer management platform creates the supplementary security domain, the card issuer management platform sends the basic information (such as the SSDID of a smart card) of the newly created supplementary security domain and the supplementary security domain initial key to the application provider management platform, and the application provider management platform generates the supplementary security domain key, and updates the supplementary security domain initial key (replace the supplementary security domain initial key with the supplementary security domain key generated by the application provider management platform) to guarantee the security of application communication of the application provider own.

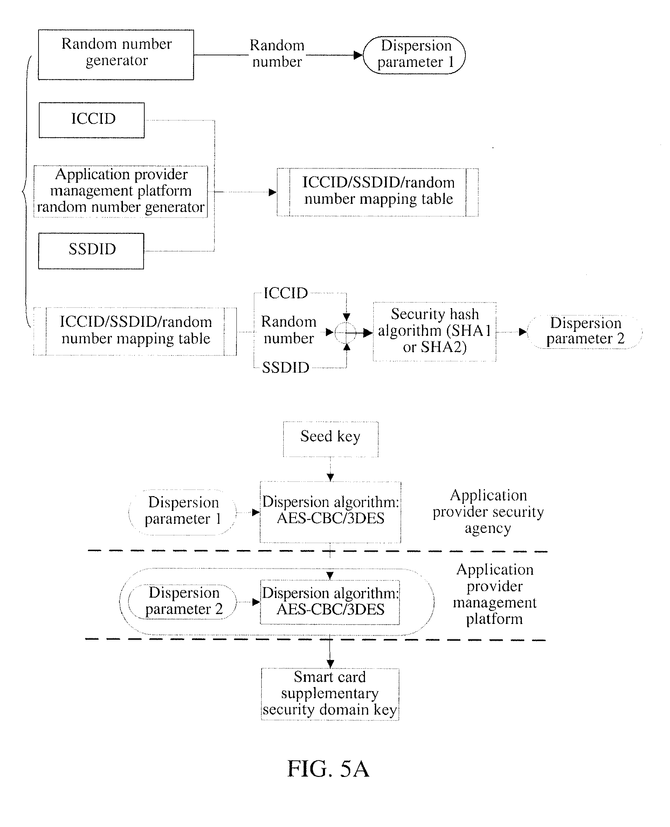

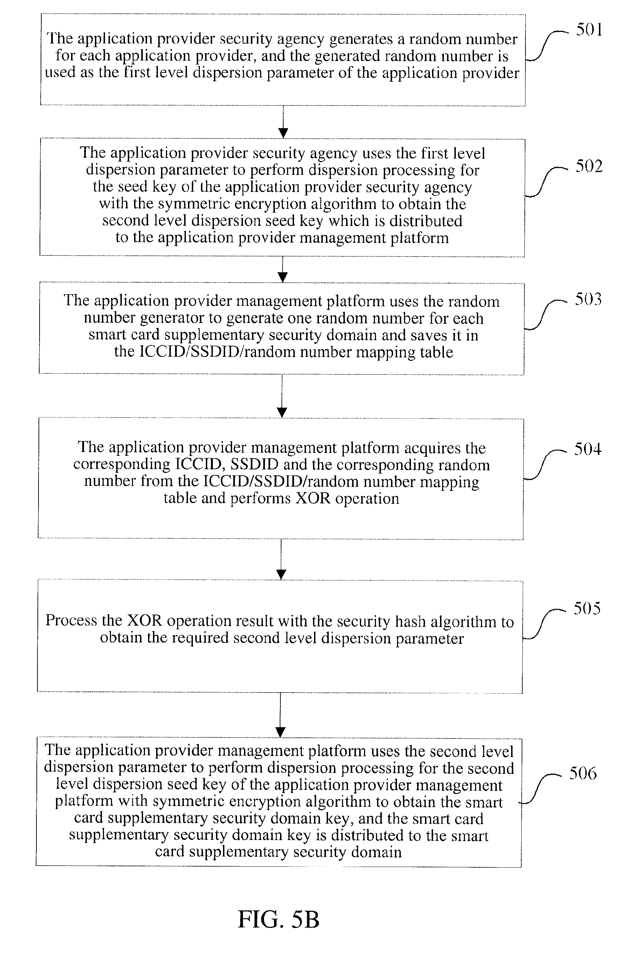

FIG. 5A is a schematic diagram of the method for generating the supplementary security domain key of the supplementary security domain managed by the application provider in accordance with an embodiment of the present invention, and FIG. 5B is a flow chart of the method for generating the supplementary security domain key of the supplementary security domain managed by the application provider in accordance with an embodiment of the present invention. As shown in FIG. 5A and FIG. 5B, the method for generating the supplementary security domain key of the smart card supplementary security domain managed by the application provider comprises the following steps:
Step 501: the application provider security agency uses the random number generator to generate a random number for each application provider (the application provider management platform), and the generated random number is used as the first level dispersion parameter (dispersion parameter 1) of the application provider (application provider management platform);
   the application provider security agency saves the random number/first level dispersion parameter generated for the application provider in the mapping table of the random number and the application provider management platform, and the mapping table is saved by the application provider security agency.
Step 502: the application provider security agency uses the first level dispersion parameter to perform dispersion processing for the seed key of the application provider security agency with the symmetric encryption algorithm (AES-CBC or 3DES algorithm), so as to obtain the second level dispersion seed key which is distributed to the application provider management platform through a secure way;
Step 503: the application provider management platform uses the random number generator to generate a random number for each smart card supplementary security domain and saves it in the ICCID/SSDID/random number mapping table;
Step 504: directing at one smart card supplementary security domain which needs to generate a supplementary security domain key, the application provider management platform acquires the corresponding ICCID, SSDID and the corresponding random number from the ICCID/SSDID/random number mapping table and performs XOR operation ;
Step 505: process the XOR operation result in step 504 with the security hash algorithm (such as SHA1 or SHA2 algorithm) to obtain the second level dispersion parameter (dispersion parameter 2) needed for generating the smart card supplementary security domain key;
Step 506: the application provider management platform uses the second level dispersion parameter obtained in step 505 to perform the dispersion processing for the second level dispersion seed key of the application provider management platform with the symmetric encryption algorithm (such as AES-CBC or 3DES algorithm), so as to obtain the smart card supplementary security domain key, and according to the basic information of the smart card supplementary security domain and the supplementary security domain initial key, the generated smart card supplementary security domain key is distributed to the smart card supplementary security domain through a secure way.

When the smart card supplementary security domain key is about to expire or is updated compulsorily due to security reasons, the smart card supplementary security domain key needs to be updated. The update of the supplementary security domain key is started by the management platform managing the smart card supplementary security domain (the card issuer management platform or the application provider management platform).

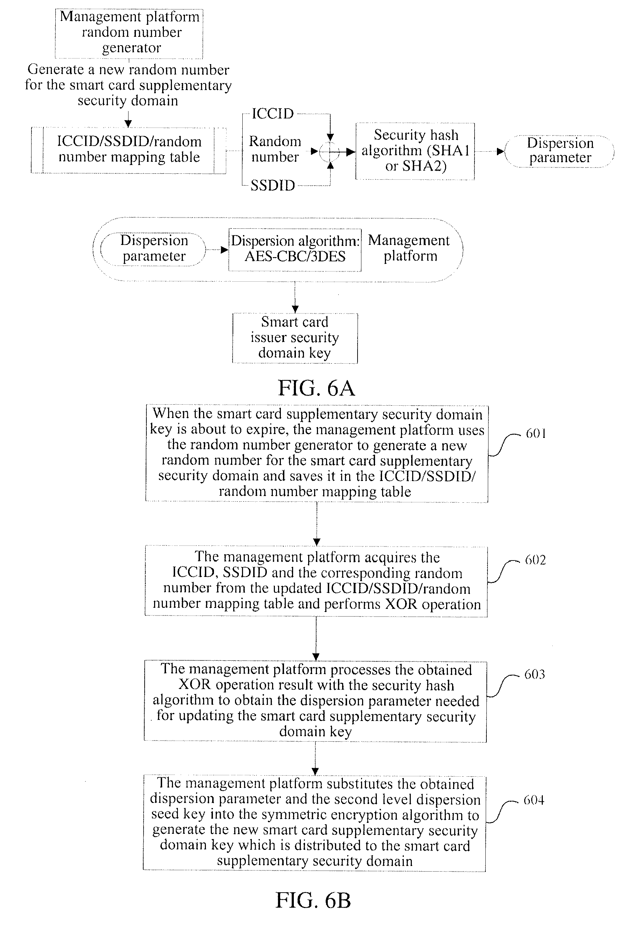

FIG. 6A is a schematic diagram of the method for updating the smart card supplementary security domain key in accordance with an embodiment of the present invention, and FIG. 6B is a flow chart of the method for updating the supplementary security domain key in accordance with an embodiment of the present invention. As shown in FIG. 6A and FIG. 6B, the method for updating the smart card supplementary security domain key comprises the following steps:
Step 601: the management platform (the card issuer management platform or the application provider management platform) manages the smart card supplementary security domain key, and sets the time for updating the smart card supplementary security domain key; when the smart card supplementary security domain key is about to expire or is updated compulsorily due to security reasons, the management platform uses the random number generator to generate a new random number for the smart card supplementary security domain to replace the random number corresponding to the smart card supplementary security domain in the ICCID/SSDID/random number mapping table, and saves the updated ICCID/SSDID/random number mapping table;
Step 602: the management platform acquires the ICCID, SSDID and the corresponding random number from the updated ICCID/SSDID/random number mapping table and performs XOR operation;
Step 603: the management platform processes the XOR operation result acquired in step 602 with the security hash algorithm (such as SHA1 or SHA2 algorithm) to obtain the dispersion parameter needed for updating the smart card supplementary security domain key;
Step 604: the management platform substitutes the dispersion parameter obtained in step 603 and the second level dispersion seed key saved by the management platform into the symmetric encryption algorithm (such as AES-CBC or 3DES algorithm) to calculate and generate the new smart card supplementary security domain key which is distributed to the smart card supplementary security domain through a secure way.

According to the basic principle of the present invention, the above embodiment might have a lot of variations, for example:
1. When generating the dispersion parameters, other logical operations such as processing methods of logic OR and logic AND can be used to replace XOR.
   For example, in step 104, the card issuer management platform acquires the ICCID and the corresponding random number from the ICCID/random number mapping table and performs logic AND operation for ICCID and random number, and then the logic AND operation result of ICCID and corresponding random number is processed with the security hash algorithm to obtain the second level dispersion parameter.
2. When generating the dispersion parameter, the random number can be directly used as the dispersion parameter, or the random number is processed with the security hash algorithm to obtain the dispersion parameter.
3. Each management platform can also save the dispersion parameter generated for each smart card security domain (issuer security domain or supplementary security domain of the smart card).
4. The security agency (card issuer security agency or the application provider security agency) can also perform XOR operation for the random number and the management platform identification (such as the card issuer identification or the application provider identification), and processes XOR operation result with the security hash algorithm to generate the first level dispersion parameter for the management platform.

### Industrial Applicability

With the method for generating the smart card key in accordance with the present invention, new random numbers are generated for the smart card security domains (issuer security domains or supplementary security domains) when generating the smart card security domain keys, and the newly generated random numbers are used to generate the new dispersion parameters, and finally the new dispersion parameters are used to generate the new smart card security domain keys, so as to solve the problem that the smart card security domain keys are not easy to be updated.

## Claims

1. A method for generating a smart card key, said method comprising:
a management platform generating a random number for a smart card security domain and using said random number to generate a dispersion parameter for said smart card security domain;
using said dispersion parameter and a seed key of the management platform as parameters of a dispersion algorithm, and using the dispersion algorithm to generate the key of said smart card security domain.

2. The method of claim 1, wherein, said step of using said random number to generate the dispersion parameter for said smart card security domain is:
said management platform using said random number and the following parameters to perform an operation: all or part of bytes in a smart card identification corresponding to said smart card security domain, and/or all or part of bytes in a smart card security domain identification of said smart card security domain;
said management platform using a result of said operation to generate the dispersion parameter for said smart card security domain with a hash algorithm.

3. The method of claim 1, wherein, said step of using said random number to generate the dispersion parameter for said smart card security domain is:
using said random number as the dispersion parameter of said smart card security domain.

4. The method of claim 1, 2 or 3, wherein,
said management platform saves the random number of the smart card security domain, or a corresponding relationship between the dispersion parameter and the smart card security domain identification.

5. The method of claim 1, wherein,
the seed key of said management platform is a second level dispersion seed key generated by a security agency with the following method and distributed to said management platform:
said security agency generates a random number for said management platform and uses the generated random number as a first level dispersion parameter, or carries out an operation on the generated random number and a management platform identification and uses the operation result to generate the first level dispersion parameter with a hash algorithm;
said security agency uses the generated first level dispersion parameter and the seed key of the security agency as the parameters of a dispersion algorithm, and generates said second level dispersion seed key with the dispersion algorithm.

6. The method of claim 5, wherein,
said security agency saves a corresponding relationship between said management platform and the random number generated for said management platform or said first level dispersion parameter.

7. The method of claim 2 or 5, wherein,
said operation is a logic operation.

8. The method of claim 7, wherein,
said logic operation is XOR operation.

9. The method of claim 5, wherein,
if said management platform is a card issuer management platform, said security agency is a card issuer security agency;
if said management platform is an application provider management platform, said security agency is an application provider security agency.

10. The method of claim 4, wherein, in said step of saving the corresponding relationship,
if said smart card security domain is a smart card issuer security domain, said management platform saves the random number corresponding to said smart card issuer security domain in a mapping table of a corresponding relationship between the smart card identification and the random number, or saves the dispersion parameter corresponding to said smart card issuer security domain in a mapping table of a corresponding relationship between the smart card identification and the dispersion parameter;
if said smart card security domain is a smart card supplementary security domain, said management platform saves the random number corresponding to said smart card supplementary security domain in a mapping table of a corresponding relationship between the smart card identification, a supplementary security domain identification and the random number, or saves the dispersion parameter corresponding to the smart card supplementary security domain in a mapping table of a corresponding relationship between the smart card identification, the supplementary security domain identification and the dispersion parameter.
